# EUROPÄISCHE PATENTSCHRIFT

(11) **EP 4 115 310 B1**
(45) Veröffentlichungstag und Bekanntmachung des Hinweises auf die Patenterteilung: **14.02.2024**
(21) Anmeldenummer: 21721863.5
(22) Anmeldetag: 14.04.2021
(51) Int. Cl.: G06F 21/44, H04L 9/32

(54) **VERFAHREN UND VORRICHTUNG ZUR ERKENNUNG VON SCHÄDLICHEN DIENSTEN IN EINEM NETZ**
METHOD AND DEVICE FOR DETECTING MALICIOUS SERVICES IN A NETWORK
PROCÉDÉ ET DISPOSITIF DE DÉTECTION DE SERVICES MALVEILLANTS DANS UN RÉSEAU

(30) Priorität: 20.04.2020 EP 20170304
(43) Veröffentlichungstag der Anmeldung: 11.01.2023
(73) Patentinhaber: Siemens Aktiengesellschaft, 80333 München (DE)
(72) Erfinder: GERDES, Florian, 91058 Erlangen (DE); HAHN, Christian, 91315 Höchstadt a.d. Aisch (DE); ZHANG, Wenlong, 90489 Nürnberg (DE)
(74) Vertreter: Siemens Patent Attorneys
(86) Internationale Anmeldenummer: PCT/EP2021/059677
(87) Internationale Veröffentlichungsnummer: WO 2021/213862

(56) Entgegenhaltungen:
- US-A1- 2018 212 768
- GIARETTA ALBERTO ET AL: "Protecting the Internet of Things with Security-by-Contract and Fog Computing", 2019 IEEE 5TH WORLD FORUM ON INTERNET OF THINGS (WF-IOT), IEEE, 15. April 2019 (2019-04-15), Seiten 1-6, XP033578641, DOI: 10.1109/WF-IOT.2019.8767243
- DUAN LI ET AL: "A Comprehensive Security Framework for Publish/Subscribe-Based IoT Services Communication", IEEE ACCESS, Bd. 7, 12. Februar 2019 (2019-02-12), Seiten 25989-26001, XP011713196, DOI: 10.1109/ACCESS.2019.2899076
- PAN JIANLI ET AL: "EdgeChain: An Edge-IoT Framework and Prototype Based on Blockchain and Smart Contracts", IEEE INTERNET OF THINGS JOURNAL, IEEE, USA, Bd. 6, Nr. 3, 1. Juni 2019 (2019-06-01), Seiten 4719-4732, XP011731303, DOI: 10.1109/JIOT.2018.2878154

## Beschreibung

Die vorliegende Erfindung betrifft ein computergestütztes Verfahren zur Erkennung von nicht-qualifizierten Diensten in einem Netz verteilter Dienste, ein geeignetes Computersystem und Netz.

### Stand der Technik

Der Stand der Technik wird durch folgende Dokumente dargestellt: GIARETTA ALBERTO ET AL: "Protecting the Internet of Things with Security-by-Contract and Fog Computing",2019 IEEE WF-IOT, 15. April 2019 DOI: 10.1109/WF-IOT.2019.8767243;
DUAN LI ET AL: "A Comprehensive Security Framework for Publish/ Subscribe-Based IoT Services Communication",IEEE ACCESS,DOI: 10.1109/ACCESS.2019.2899076;
US 2018/212768;
A1PAN JIANLI ET AL: "EdgeChain: An Edge-IoT Framework and Prototype Based on Blockchain and Smart Contracts",IEEE INTERNET OF THINGS JOURNAL, DOI: 10.1109/JIOT.2018.2878154

Immer mehr Aufgaben werden durch Netze verteilter Dienste erbracht. Das sind beispielsweise sogenannte IOT-Umgebungen. Die Aufgaben solcher Netze sind vielfältig: Speicherung und Verarbeitung von Nutzerdaten (z.B. Google Analytics), Speicherung und Verarbeitung von Gesundheitsdaten (z.B. HIS, RIS, PACS), Steuerung von (öffentlicher) Infrastruktur (z.B. Verkehrsleitung in Städten, Energieverteilung), Schutz der Gesundheit von Passagieren (z.B. Flugsicherung, Zugsicherung), Steuerung von Industrieanlagen (z.B. diskrete Fertigung, Prozesstechnik), Steuerung von Energieerzeugungsanlagen (z.B. konventionelle Kraftwerke, Kernkraftwerke, Hybrid-Kraftwerke) .

Jeder Teilnehmer eines solchen Netzes kann (einen oder mehrere) Dienste anbieten und von anderen Teilnehmern angebotene Dienste nutzen. Ein Teilnehmer kann beispielsweise ein Computersystem, eine Komponente eines Computersystems, eine Software im Sinne eines Dienstes oder eine Softwarekomponente sein.

Typischerweise sind diese Netze verteilt, was bedeutet, dass die Teilnehmer sich an beliebigen Orten befinden können. Die Kommunikation zwischen den Teilnehmern erfolgt in der Regel über physische oder digitale Kommunikationswege. Viele dieser Netze sind offen, was bedeutet, dass neue Dienste oder Teilnehmer dem Netz jederzeit beitreten können. Außerdem sind einige dieser Netze dezentral, was heißt, dass es keine zentrale Verwaltung der Dienste oder Teilnehmer gibt. In derartige Netze können relativ leicht sogenannte Mal(-behaved) Services, also schädliche Dienste eingebracht werden. Diese schädlichen Dienste sind Eindringlinge und können in unterschiedlicher Gestalt auftreten, z. B. kann mittels eines Wurms, Trojaners oder eines manuellen Eingriffs die Software eines Dienstes verändert werden, wodurch der Dienst selbst zum Eindringling wird. Oder ein Eindringling nutz die Offenheit eines Netzes aus um diesem einfach als Dienst beizutreten. Außerdem können bereits zum Entstehungszeitpunkt des Netzes nicht vertrauenswürdige Dienste eingebaut werden.

Ein Eindringling beeinträchtigt durch sein Verhalten nicht unbedingt die Funktionalität eines Dienstes oder des gesamten Netzes, sondern häufig wird in erster Linie die Qualität vermindert, wodurch die Veränderung nicht oder nur zeitversetzt auffällt. Die essenzielle Qualität eines Netzes liegt beispielsweise in seiner (Informations-)Sicherung, der Integrität, der Sicherheit und Verfügbarkeit, in seiner Zuverlässigkeit und seiner Zweckdienlichkeit. Erfüllt ein Netz seine Aufgabe nicht mehr oder nicht mehr in geeigneter Weise und Qualität, entsteht dem Nutzer dieses Netzes ein unmittelbarer Schaden, z.B. Zeitverlust wegen Nicht-Verfügbarkeit von Diensten, Datenverlust auf Grund nicht gespeicherter Daten, die bei Absturz eines Dienstes verloren gingen, Zugriff Dritter auf sensible personenbezogene Daten wie Passwörter oder medizinische Daten. Es kann zu Verletzungen bis hin zum Tod von Personen kommen, wenn z.B. Sicherheitsmechanismen deaktiviert oder sensible Systemeinstellungen verändert wurden. Einem Netzbetreiber kann so ein unmittelbarer Schaden durch Strafen, erhöhte Kosten, Rufschädigung und/oder Sanktionen entstehen. Einem Hersteller von Netzen und/oder Netzkomponenten entstünde demnach ein mittelbarer Schaden, z.B. durch Regressforderungen, Kosten, z.B. für das Fixing, Rufschädigung, Verlust von Kunden und/oder Marktanteilen und/oder durch Sanktionen.

Bisher wird schädlichen Diensten über Zugriffsregelungen wie Zertifikate, Authentifizierungen und Autorisierungen der Zugang zu Netzen verwehrt. Gängige Ansätze dafür arbeiten mit Passwörtern, symmetrischer Authentifizierung mit und ohne Kryptographie, kryptographische Verfahren oder beispielsweise IP/MAC Whitelisting. Für diese Verfahren sind ein hoher Administrationsaufwand nötig und es besteht ein hoher Rechenzeitbedarf während der Laufzeit, d.h. bei jeder Kommunikation. Außerdem besteht das Risiko, dass das Geheimnis (Secret) ausgespäht wird und somit ein Zugang nicht-autorisierter Dienste möglich wird. Hat ein Eindringling einmal die Zugangsdaten, kann er auf alle Dienste im Netz zugreifen.

Es ist also eine Aufgabe der vorliegenden Erfindung, verbesserte technische Mittel bzw. ein verbessertes technisches Verfahren bereitzustellen, mit dem schädliche Dienste aus Netzen ferngehalten werden können.

Die Aufgabe wird wie in den unabhängigen Ansprüchen definiert gelöst.

### Beschreibung der Erfindung

Das erfindungsgemäße computergestützte Verfahren umfasst eine Erkennung von nicht-qualifizierten Diensten in einem Netz verteilter Dienste, umfasst eine Vereinbarung von Vergleichs-Interaktionsmustern zwischen wenigstens zwei Diensten in einem Vertrag, eine Beobachtung von Interaktionsmustern während der Kommunikation der Dienste und einen Abgleich der beobachteten Interaktionsmuster mit den Vergleichs-Interaktionsmustern.

Das Erkennen nicht-konformen Verhaltens bösartiger Services erfolgt also durch einen Vergleich erwarteter und tatsächlich beobachteter Interaktionsmuster. Zur Identifikation von Eindringlingen oder sogenannten Mal Services sind also keine zusätzlichen Mechanismen für Authentifizierung und Autorisierung mit allen ihren Nachteilen mehr nötig.

Unter einem Netz verteilter Dienste ist im Zusammenhang mit der Patentanmeldung ein Netz, Netzwerk oder allg. Kommunikationssystem zu verstehen, in welchem wenigstens zwei Teilnehmer, Dienste oder Kommunikationspartner kooperieren bzw. kommunizieren. Ein Dienst ist dabei durch Software realisiert. Ein Dienst ist ein computergestütztes Verfahren. Dieser Dienst kann auf mehreren Teilnehmern laufen. Auch können mehrere Dienste auf einem Teilnehmer ausgeführt werden. Unter einem Interaktionsmuster ist im Zusammenhang mit der Patentanmeldung sind messbare Charakteristika einer Interaktion, Kooperation oder allg. Kommunikation zweier Teilnehmer, Dienste oder Kommunikationspartner in einem Netz zu verstehen. Unter einem Vertrag kann im Zusammenhang mit der Patentanmeldung ein Kontrakt, eine Vereinbarung, eine Abgleichsvorlage, eine Vertragsspezifikation, etc. verstanden werden. Das Vertragsverzeichnis kann zentral oder verteilt ausgeführt sein. Alternativ zu Vertragsspezifikationen kann jede Datei, in welcher die vereinbarten und /oder beobachteten Interaktionsmuster zuverlässig und abstrahiert dokumentiert sind verwendet werden. Der Abgleich der beobachteten Interaktionsmuster mit den Verträgen kann auch schrittweise erfolgen, z.B. zunächst der Abgleich einer Anfrage und anschließend der Abgleich einer Antwort.

"Qualifiziert" bedeutet im Zusammenhang mit der Patentanmeldung "vertragsgemäß handelnd".

In einer besonders vorteilhaften Variante des erfindungsgemä-βen computergestützten Verfahrens werden die Vergleichs-Interaktionsmuster während der Entwicklungszeit den erforderlichen Tests entnommen.

Unter Entwicklungszeit ist im Zusammenhang mit der Patentanmeldung die Zeit von Beginn der ersten Arbeiten an einem Dienst bis zu dessen Fertigstellung. Dabei wird von keiner Überschneidung von Entwicklungs- und Betriebszeit ausgegangen. Die Betriebszeit beginnt zum Zeitpunkt des ersten Einsatzes des Dienstes in einem Netz.

Dies hat den Vorteil, dass der Verwaltungsaufwand sehr gering ist, da die Services nicht einzeln verwaltet werden müssen. Die Kontraktspezifikation entsteht quasi als Abfallprodukt der Entwicklung. Verträge zwischen zwei Diensten können separat vereinbart werden. Sie können aber vorteilhafterweise sehr effizient während der Entwicklungszeit der Dienstsoftware automatisch generiert werden. Z.B. können die Verträge über die Vertragstests entstehen. Die fertigen Verträge werden nach abgeschlossener Entwicklung des Netzes bevorzugt verschlüsselt und in einem Vertragsverzeichnis abgelegt. Dies hat den weiteren Vorteil, dass das Einbringen neuer Verträge durch einen einheitlichen Mechanismus erfolgt bzw. erfolgen kann.

In einer weiteren vorteilhaften Variante des erfindungsgemä-βen computergestützten Verfahrens erfolgt eine Meldung eines als nicht-qualifiziert erkannten Dienstes beim Administrator und/oder ein Ausschluss eines als nicht-qualifiziert erkannten Dienstes aus dem Netz verteilter Dienste.

In einer weiteren vorteilhaften Variante des erfindungsgemä-βen computergestützten Verfahrens beobachtet ein Dienst eine Kommunikation, die er mit einem anderen Dienst unterhält. Unter Kommunikation sind dabei Anfragen, sogenannte Requests, und Antworten, Responses, zu verstehen. Die Beobachtung selbst wird von einem Observer vorgenommen. Dieser ist dem Dienst insbesondere vorgelagert. Die Beobachtung wird durch eine Kommunikation des Dienstes initiiert. Die Observer-Softwarekomponente ist insbesondere Teil des Verifikationssubsystems.

In einer weiteren vorteilhaften Variante des erfindungsgemä-βen computergestützten Verfahrens umfasst dieses einen Abgleich der beobachteten Kommunikation ausgehend von einem anderen Dienst mit dem Vertrag.

Wird zu einer beobachteten Kommunikation kein passender Kontrakt durch den syntaktischen Abgleich gefunden, dann zeigt der andere Dienst mit Sicherheit ein Verhalten; der andere Dienst wird dadurch sicher als Eindringling erkannt. Wird mindestens ein passender Kontrakt gefunden, dann bedeutet das, dass sich der andere Dienst bei der beobachteten Kommunikation kontraktkonform verhalten hat; dies ist kein Beweis dafür, dass es sich um einen Eindringling oder keinen Eindringling handelt. Es ist lediglich klar, dass sich der Dienst bei eben jeder abgeglichenen Kommunikation vertragskonform und damit syntaktisch korrekt verhalten hat.

In einer weiteren vorteilhaften Variante des erfindungsgemä-βen computergestützten Verfahrens werden für eine Hinzufügung eines weiteren Dienstes zu einem bestehenden Netz verteilter Dienste, die diesen weiteren Dienst betreffenden Verträge signiert und/oder kryptografisch gesichert und allen Verifikationssubsystemen des Netzes zugänglich gemacht. Insbesondere ist der Hersteller oder Betreiber des Dienstes signaturverantwortlich.

Der Hinzufügung eines neuen Dienstes zum Netz gehen also zunächst die Kontrakterzeugung gemäß oben beschriebenem Ablauf voraus und anschließen die Verschlüsselung und Verteilung.

Unter dem Verifikationssubsystem ist im Zusammenhang mit der Patentanmeldung die Gesamtheit der Softwarekomponenten Observer, Matcher, Gate, Vertragsverzeichnis und Encoder zu verstehen. Die zugehörigen Verfahrensschritt werden entsprechend in der Verifikationsstufe zusammengefasst.

Die Signatur und/oder kryptografische Sicherung erfolgt beispielsweise mit einem privaten Schlüssel. Alternativ können alle Sicherungsverfahren verwendet werden, welche die Authentizität und Integrität der Verträge gewährleisten können.

Außerdem muss stets auch die Integrität des Vertragsverzeichnis gewährleistet sein.

Die Secrets werden dafür beispielsweise in einer absicherbaren Entwicklungszeit-Umgebung vorgehalten und sind nicht in der offenen Betriebszeit-Umgebung verfügbar.

Das erfindungsgemäße Verfahren hat zudem die Vorteile, schädliche Dienste in ungeschützten Netzen, z.B. free-to-join Umgebungen, identifiziert werden können.

Erfindungsgemäß wird ein Computersystem bereitgestellt, wobei das Computersystem eine Ausführungsumgebung für wenigstens einen Dienst eines Verbrauchers und/oder Anbieters aufweist, außerdem so in einem Netz verteilter Dienste als zertifizierter Teilnehmer eingebunden ist, dass es mit wenigstens einem weiteren Computersystem kommunizieren kann und Zugriff auf wenigstens eine Speichereinheit mit einem Vertragsverzeichnis hat, in dem Verträge mit Vergleichs-Interaktionsmustern bereitgestellt sind, wobei das Computersystem wenigstens eine Datenverbindung mit einem Observer aufweist, welcher ausgestaltet ist Beobachtungsdaten von Interaktionsmustern während der Kommunikation mit dem weiteren Computersystem aufzunehmen, wobei das Computersystem wenigstens eine direkte Datenverbindung mit einem Interface und/oder eine indirekte Datenverbindung mit einer Interface über den Observer aufweist sowie eine direkte Datenverbindung mit einem Gate über einen Forwarder des Gates und eine indirekte Datenverbindung mit dem Gate über den Observer und einen Matcher oder über den Observer, einen Matcher und das Interface, wobei der Matcher ausgestaltet ist für einen Abgleich erforderliche Schlüssel von einer zertifizierten Stelle anzufordern, damit auf signierte und/oder kryptografisch gesicherte Verträge im Vertragsverzeichnis zuzugreifen und Verträge daraus auszuwählen, die zu den Interaktionsmustern der beobachteten Kommunikation passen.

Beispielsweise umfasst das Gate einen Escalater, welcher ausgestaltet ist, eine Warnmeldung zu erzeugen und/oder den schädlichen Dienst auszuschließen.

Das Computersystem ist also insbesondere ein Netzteilnehmer. Unter einem Matcher ist eine Softwarekomponente, z. B. eine Abgleichsfunktion zu verstehen, welche vergleicht, insbesondere Interaktionsmuster. Das Gate, Request- bzw. Response Gate bezeichnet eine Softwarekomponente, welche anhand vorgebbarer Kriterien entscheidet. Das Vertragsverzeichnis kann zentral oder dezentral ausgestaltet sein. Entscheidend ist, dass jeder Teilnehmer und/oder Dienst Zugriff auf das Vertragsverzeichnis hat.

In einer Ausführungsform der Erfindung wird ein Computersystem wie vorstehend beschrieben bereitgestellt, wobei die Komponenten Observer, Matcher, Gate, Vertragsverzeichnis, und Encoder in einem Verifikationssubsystem zwischen wenigstens einem Dienst und dem Interface realisiert sind, welches Verifikationssubsystem dieselbe Applikationsschnittstelle wie das Interface aufweist.

Insbesondere ist pro Interface nur ein Verifikationssubsystem erforderlich. Das Verifikationssubsystem kann beispielsweise eine Schicht bilden oder in einer Schicht enthalten sein. Dies kann seitens eines Anbieter- oder seitens eines Verbraucherdienstes vorgesehen sein. Es ist aber auch möglich, dass beide Dienste auf jeweils ihrer Seite des Interfaces ein Verifikationssubsystem aufweisen. Eine derartige Variante kann beispielsweise zwischen jedem Netzteilnehmer und dem Interface jeweils ein vorstehend beschriebenes Verifikationssubsystem aufweisen.

Alternativ kann die Gesamtheit der Verifikationssubsystemkomponenten Observer, Matcher, Gate, Vertragsverzeichnis und Encoder auch in einer Softwarekomponente der jeweiligen Dienste oder der jeweiligen Teilnehmer, z.B. verschiedener Computer-systeme im Netz realisiert sein.

Damit ist das Verfahren für die Apps vollständig transparent. Das Verfahren funktioniert für alle Apps aus allen Quellen. Bei bisher im Stand der Technik bekannten Lösungen müssen die Apps speziell vorbereitet sein z.B. durch Passwort-Prüfung, Prüfung von Tokens oder Zertifikaten; Apps ohne das können nicht teilnehmen.

Erfindungsgemäß wird ein verteiltes Netz bereitgestellt, welches wenigstens einen ersten zertifizierten Teilnehmer oder einen ersten zertifizierten Dienst eines Teilnehmers, Verbrauchers und/oder Anbieters umfasst, außerdem wenigstens einen zweiten zertifizierten Teilnehmer und/oder einen zweiten zertifizierten Dienst aufweist, welcher mit dem ersten Dienst kommuniziert, sowie wenigstens eine Speichereinheit mit einem Vertragsverzeichnis, in dem Vertragsspezifikationen mit Vergleichs-Interaktionsmustern bereitgestellt sind. Das Netz weist außerdem wenigstens eine Datenverbindung des ersten Dienstes mit einem Observer auf, welcher ausgestaltet ist Beobachtungsdaten von Interaktionsmustern während der Kommunikation mit dem zweiten Dienst aufzunehmen. Das Netz weist des Weiteren wenigstens eine direkte Datenverbindung des ersten Dienstes mit einem Interface und/oder eine indirekte Datenverbindung des ersten Dienstes mit einem Interface über den Observer auf sowie eine direkte Datenverbindung des ersten Dienstes mit einem Gate über einen Forwarder des Gates und eine indirekte Datenverbindung des ersten Dienstes mit dem Gate über den Observer und einen Matcher oder über den Observer, einen Matcher und das Interface, wobei der Matcher ausgestaltet ist, für einen Abgleich erforderliche Schlüssel von einer zertifizierten Stelle anzufordern, damit auf signierte und/oder kryptografisch gesicherte Verträge im Vertragsverzeichnis zuzugreifen und Verträge daraus auszuwählen, die zu den Interaktionsmustern der beobachteten Kommunikation passen.

Beispielsweise ist das beschriebene verteilte Netz offen für den Beitritt neuer Teilnehmer und/oder Dienste.

Insbesondere ist das verteilte Netz nach einer der obenstehenden Beschreibungen dezentral aufgebaut.

Das erfindungsgemäße Computerprogrammprodukt ist direkt in einen Speicher einer programmierbaren Recheneinheit eines oben beschriebenen Computersystems ladbar und weist Programmcode-Mittel auf, um ein erfindungsgemäßes Verfahren auszuführen, wenn das Computerprogrammprodukt in der Recheneinheit des Computersystems ausgeführt wird. Das Computerprogrammprodukt kann ein Computerprogramm sein oder ein Computerprogramm umfassen. Dadurch kann das erfindungsgemäße Verfahren schnell, identisch wiederholbar und robust ausgeführt werden. Das Computerprogrammprodukt ist so konfiguriert, dass es mittels der Recheneinheit die erfindungsgemäßen Verfahrensschritte ausführen kann. Die Recheneinheit muss dabei jeweils die Voraussetzungen wie beispielsweise einen entsprechenden Arbeitsspeicher, eine entsprechende Grafikkarte oder eine entsprechende Logikeinheit aufweisen, so dass die jeweiligen Verfahrensschritte effizient ausgeführt werden können. Das Computerprogrammprodukt ist beispielsweise auf einem computerlesbaren Medium gespeichert oder auf einem Netzwerk oder Server hinterlegt, von wo es in den Prozessor einer lokalen Recheneinheit geladen werden kann, der mit dem Computersystem direkt verbunden oder als Teil des Computersystems ausgebildet sein kann. Weiterhin können Steuerinformationen des Computerprogrammprodukts auf einem elektronisch lesbaren Datenträger gespeichert sein. Die Steuerinformationen des elektronisch lesbaren Datenträgers können derart ausgestaltet sein, dass sie bei Verwendung des Datenträgers in einer Recheneinheit des Computersystems ein erfindungsgemäßes Verfahren ausführen. So kann das Computerprogrammprodukt auch den elektronisch lesbaren Datenträger darstellen. Beispiele für elektronisch lesbare Datenträger sind eine DVD, ein Magnetband, eine Festplatte oder ein USB-Stick, auf welchem elektronisch lesbare Steuerinformationen, insbesondere Software (vgl. oben), gespeichert ist. Wenn diese Steuerinformationen (Software) von dem Datenträger gelesen und in eine Steuerung und/oder Recheneinheit des Computersystems gespeichert werden, können alle erfindungsgemäßen Ausführungsformen der vorab beschriebenen Verfahren durchgeführt werden. So kann die Erfindung auch von dem besagten computerlesbaren Medium und/oder dem besagten elektronisch lesbaren Datenträger ausgehen.

Darüber hinaus wird eine Bereitstellungsvorrichtung zum Speichern und/oder Bereitstellen des Computerprogrammprodukts beansprucht. Die Bereitstellungsvorrichtung ist beispielsweise ein Datenträger, der das Computerprogrammprodukt speichert und/oder bereitstellt. Alternativ und/oder zusätzlich ist die Bereitstellungsvorrichtung beispielsweise ein Netzwerkdienst, ein Computersystem, ein Serversystem, insbesondere ein verteiltes Computersystem, ein cloudbasiertes Rechnersystem und/oder virtuelles Rechnersystem, welches das Computerprogrammprodukt vorzugsweise in Form eines Datenstroms speichert und/oder bereitstellt.

Diese Bereitstellung erfolgt beispielsweise als Download in Form eines Programmdatenblocks und/oder Befehlsdatenblocks, vorzugsweise als Datei, insbesondere als Downloaddatei, oder als Datenstrom, insbesondere als Downloaddatenstrom, des vollständigen Computerprogrammprodukts. Diese Bereitstellung kann beispielsweise aber auch als partieller Download erfolgen, der aus mehreren Teilen besteht und insbesondere über ein Peer-to-Peer Netzwerk heruntergeladen oder als Datenstrom bereitgestellt wird. Ein solches Computerprogrammprodukt wird beispielsweise unter Verwendung der Bereitstellungsvorrichtung in Form des Datenträgers in ein System eingelesen und führt die Programmbefehle aus, sodass das erfindungsgemäße Verfahren auf einem Computer zur Ausführung gebracht wird oder das Erstellungsgerät derart konfiguriert, dass dieses das Sicherheitsmodul und/oder die Konfigurationsvorrichtung und/oder die Komponente und/oder Authentifizierungssystem erstellt.

Die Erfindung birgt besonders große Vorteile im Zusammenhang mit Cloud-to-Edge- und IoT-Anwendungen: Die Absicherung der Kommunikation verursacht keinen Footprint auf den Edge-Devices und ist anwendbar auch bei Anlagen mit hunderten oder tausenden von Edge-Devices. Es entsteht kein Verwaltungs-Overhead. Des Weiteren kann die Akzeptanz digitaler Angebote gesteigert werden, da kein erhöhter Aufwand für die Absicherung des zum Internet hin offenen Netzes beim Kunden entsteht und das Netz beim Kunden trotz Offenheit abgesichert ist. Legaldefinitionen:
Computergestützt, Computersystem, etc.:
Sofern es in der nachfolgenden Beschreibung nicht anders angegeben ist, beziehen sich die Begriffe "durchführen", "berechnen", "bereit stellen", "rechnergestützt", "computergestützt", "rechnen", "feststellen", "generieren", "konfigurieren", "rekonstruieren" und dergleichen, vorzugsweise auf Handlungen und/oder Prozesse und/oder Verarbeitungsschritte, die Daten oder Datenpakete verändern und/oder erzeugen und/oder die Daten in andere Daten überführen, wobei die Daten insbesondere als physikalische Größen dargestellt werden oder vorliegen können, beispielsweise als elektrische Impulse.

Insbesondere sollte der Ausdruck "Computersystem" möglichst breit ausgelegt werden, um insbesondere alle elektronischen Geräte mit Datenverarbeitungseigenschaften abzudecken. Computersysteme können als Computer, Rechner oder Rechnersystem bezeichnet werden. Computersysteme können somit beispielsweise Personal Computer, Server, Handheld-Computer-Systeme, Pocket-PC-Geräte, Mobilfunkgeräte und andere Kommunikationsgeräte, die rechnergestützt Daten verarbeiten können, Prozessoren und andere elektronische Geräte zur Datenverarbeitung einschließen. Computersysteme können somit beispielsweise auch Cluster, virtuelle Computer, wie etwa Clouds, allgemein Datenverarbeitungssysteme oder -module bis hin zu Mini-Einplatinenrechnern oder eingebetteten Systemen, sogenannten embedded Systems oder Devices sein, außerdem Edge-Device oder Steuergeräte mit Software-Ausführungsumgebung.

Unter "computergestützt" kann im Zusammenhang mit der Patentanmeldung beispielsweise eine Implementierung des Verfahrens verstanden werden, bei der insbesondere ein Prozessor mindestens einen Verfahrensschritt des Verfahrens ausführt.

### Komponente:

Unter einer Komponente kann im Zusammenhang mit der Erfindung beispielsweise eine Baugruppe, eine Softwarekomponente oder eine Hardwarekomponente eines Gerätes, insbesondere ein BIOS-Controller einer Hauptplatine, ein Sensor, ein Datenspeicher oder eine Netzkarte, verstanden werden. Unter einer Komponente können im Zusammenhang mit der Beschreibung beispielsweise auch Geräte einer Anlage, beispielsweise ein Generator, ein Feldgerät oder ein Steuergerät, verstanden werden. Insbesondere handelt es sich bei den Komponenten jeweils um räumlich voneinander getrennte Komponenten, beispielsweise eine Netzkarte, ein BIOS-Controller der Hauptplatine oder ein Arbeitsspeicher eines Computers.

### Gerät oder System:

Unter einem (technischen) Gerät, beispielsweise Geräte oder Apparate in einer Fabrik 82 - 86, kann beispielsweise ein Messgerät für die Hochfrequenztechnik, ein Messgerät, ein Empfangsgerät einer Satellitenkommunikationsstation, ein Feldgerät einer Kraftwerksanlage verstanden werden.

Unter einem (technischen) System, beispielsweise Computersystem 100, Datenspeicher 12, Ausführungsumgebung 14, kann insbesondere auch ein eingebettetes System verstanden werden. Das Gerät oder das System oder ein oder mehrere Teile des Systems, beispielsweise des Computersystems 100, können beispielsweise auch einen Prozessor und/oder eine Speichereinheit umfassen. Bei dem Gerät oder dem System oder dem einen Teil oder den mehreren Teilen des Systems kann es sich auch um einen Prozessor handeln. Unter einem (technischen) Gerät oder einem (technischen) System kann beispielsweise auch ein IC (integrierter Schaltkreis, engl. integrated circuit), ein FPGA (engl. field programmable gate array), ein ASIC (anwendungsspezifische integrierte Schaltung, engl. applicationspecific integrated circuit) oder ein DSP (Digitaler Signalprozessor, engl. Digital Signal Processor) verstanden werden.

### Speichereinheit:

Unter einer Speichereinheit kann im Zusammenhang mit der Erfindung beispielsweise ein Speicher in Form von Arbeitsspeicher (engl. Random-Access Memory, RAM) oder eine Festplatte verstanden werden.

### Teilnehmer (eines Netzes), Kommunikationspartner:

Unter einem Netzteilnehmer, Teilnehmer einer Netzkommunikation oder Kommunikationspartner ist im Zusammenhang mit der Patentanmeldung insbesondere ein Dienst, eine Applikation, eine Software oder Softwarekomponente zu verstehen, welcher oder welche in einem Netz kommunizieren kann. Unter einem Netzteilnehmer oder Teilnehmer einer Netzkommunikation kann auch ein Computersystem, eine Workstation, ein Feldgerät oder Messgerät, ein Server oder ein Client verstanden werden. Der Netzteilnehmer oder Teilnehmer kann beispielsweise eine Netzkommunikation über ein Netz verwenden, um mit anderen Netzteilnehmern zu kommunizieren und insbesondere dabei Daten oder Datenpakete austauschen. Beispielsweise kann sich ein erster Kommunikationspartner mittels eines Zertifikats gegenüber einem zweiten Kommunikationspartner authentisieren.

### Datenverbindung:

Unter einem Verbindungstyp kann im Zusammenhang mit der Patentanmeldung beispielsweise eine direkte physische Verbindung über ein LAN (engl. "Local Area Network") oder eine virtuelle Netzverbindung verstanden werden.

### Netzkommunikation:

Unter einer Netzkommunikation kann im Zusammenhang mit der Patentanmeldung eine Kommunikation zwischen Teilnehmern eines Computernetzes verstanden werden. Unter einer Netzkommunikation kann insbesondere eine verbindungsorientiere, insbesondere eine TCP/IP-basierte Netzkommunikation, oder eine verbindungslose Kommunikation, insbesondere eine UDP-basierte Netzkommunikation, verstanden werden.

### Interface:

Unter einem Interface kann im Zusammenhang mit der Patentanmeldung eine IoT-Kommunikationsschicht oder Netz(werks)-Kommunikationsschicht (engl. Communication layer) verstanden werden.

### Schichten:

Unter einer Schicht oder Schichten einer Netzkommunikation kann im Zusammenhang mit der Patenanmeldung eine Schicht nach dem OSI Modell, dem TCP/IP Modell oder einem anderen Kommunikationsmodell verstanden werden.

### Protokoll:

Unter einem Protokoll oder einem Kommunikationsprotokoll kann im Rahmen der Patentanmeldung ein Netzprotokoll, das für eine Kommunikation zwischen Netzteilnehmern verwendbar ist. Beispiele dafür sind das TCP/IP-Protokoll oder das IPX/SPX-Protokoll.

### Datendiode:

Unter einer Datendiode kann im Rahmen der Patentanmeldung ein unidirektionales Sicherheitsgateway oder ein unidirektionales Netz oder eine unidirektionale Netzkommunikation verstanden werden. Die Datendiode kann beispielsweise dafür sorgen, dass damit Daten nur in eine Richtung gesendet werden. Dies kann beispielsweise bedeuten, dass beispielsweise von einem Sender zu einem bestimmten Netzteilnehmer Daten(pakete) gesendet werden, aber insbesondere durch die Datendiode ein Senden von Daten vom Netzteilnehmer zurück an den Sender unterbunden wird.

### Datenstrom:

Unter einem Datenstrom kann im Zusammenhang mit der Patentanmeldung beispielsweise das Versenden von Informationen mittels mehrerer Datenelemente verstanden werden. Ein Datenstrom kann beispielsweise ein Videostream sein, der von einem Streamingserver an einen oder mehrere Streamingclients mittels des UDP Protokolls übermittelt wird. Die einzelnen UDP Pakete sind in diesem Fall insbesondere die Datenelemente des erfindungsgemäßen Verfahrens. Ein Datenstrom kann allgemein durch eine Folge von Datenelementen gegeben sein. Beispielsweise enthalten mehrere oder alle Datenelemente des Datenstroms dabei eine Authentisierungsinformation, die sich auf das jeweilige Datenelement bezieht, und eine Validierungsinformation, die einer Authentisierungsinformation eines zurückliegend übertragenen Datenelements zugeordnet ist und die zu deren Überprüfung verwendbar ist. Der erfindungsgemäße Schutz von Nachrichten kann insbesondere auf alle Datenelemente eines Datenstroms oder auf eine vorgegebene Teilmenge der Datenelemente des Datenstroms angewendet werden.

### Datenpaket:

Unter einem Datenpaket kann im Zusammenhang mit der Patentanmeldung beispielsweise ein Ethernetframe, Tokenringframe, ein IP-Paket oder TCP-Segment verstanden werden. Ein Datenpaket kann Nutzdaten (engl. Payload) umfassen, die vorzugsweise verschlüsselt sind.

### Secret, Schlüssel:

Unter einem Secret oder Geheimnis, insbesondere auch als ein "Geheimnis in Form einer Zeichenkette" oder als Zeichenkette bezeichnet, kann im Zusammenhang mit der Erfindung beispielsweise eine Lizenzinformation, ein kryptographischer Schlüssel, insbesondere ein symmetrischer Schlüssel oder ein privater Schlüssel eines asymmetrischen Schlüsselpaares, verstanden werden. Unter einem Schlüssel kann im Zusammenhang mit der Erfindung beispielsweise auch ein Passwort für einen Zugriff auf eine Lizenzinformation oder auf einen kryptographischen Schlüssel verstanden werden. Der Schlüssel kann beispielsweise anhand einer weiteren Sicherheitsrichtlinie erzeugt werden, die beispielsweise eine Schlüssellänge oder einen Berechnungsalgorithmus für den Schlüssel angibt. Insbesondere die Ausdrücke "rekonstruiertes Geheimnis" und "rekonstruierte Zeichenkette" können im Zusammenhang mit der Erfindung gleichbedeutend verwendet werden.

### Prüfsumme / Prüfwert:

Eine Prüfsummenberechnungsfunktion, eine Prüfsummenfunktion oder eine Prüfwertfunktion zur Berechnung einer Prüfsumme oder eines Prüfwertes kann beispielsweise mit einer kryptographischen Funktion realisiert werden. Bei der kryptographischen Funktion kann es sich beispielsweise um eine Einwegfunktion insbesondere um die CRC16 (engl. "Cyclic Redundancy Check 16") oder die CRC32 (engl. "Cyclic Redundancy Check 32") Funktion, handeln. Die Berechnung der Prüfsumme kann beispielsweise unter Verwendung eines Prozessors und/oder Speichers erfolgen.

### Richtlinie:

Unter einer Sicherheitsrichtlinie oder einer Richtlinie kann im Zusammenhang mit der Patentanmeldung beispielsweise eine Security-Policy verstanden werden. Die Sicherheitsrichtlinie kann beispielsweise angeben, ob eine Netzkommunikation verschlüsselt stattfinden soll und/oder auf welchen Protokollebenen eines verwendeten Netzprotokolls eine Verschlüsselung verwendet werden soll, und/oder bestimmte Netzprotokolle zur Kommunikation vorgeben. Auch kann die Sicherheitsrichtlinie beispielsweise bestimmte Sendeadressen und/oder bestimmte Sendeadressbereiche und/oder Empfangsadressen und/oder Empfangsadressbereiche vorgeben.

### Anwendung:

Im Zusammenhang mit der Patentanmeldung kann unter einer "Anwendung" eine ausführbare Datei oder auch eine Programmbibliothek verstanden werden.

### Ausführungsumgebung:

Im Zusammenhang mit der Patentanmeldung kann unter einer "Ausführungsumgebung" eine virtuelle Maschine, beispielsweise eine Java Virtual Machine, ein Prozessor oder eine Betriebssystemumgebung verstanden werden. Die Ausführungsumgebung kann auf einer physikalischen Recheneinheit (Prozessor, Mikrocontroller, CPU, CPU Core) realisiert sein. Dabei kann die Ausführung der Anwendung in einem Lernmodus und in einem Ausführungsmodus auf derselben physikalischen Recheneinheit erfolgen. Ebenso ist es beispielsweise möglich, dass die Ausführung der Anwendung in einem Lernmodus in einer anderen physikalischen Recheneinheit erfolgt. So kann z.B. das Anlernen beispielsweise in einer speziellen Anlern-Recheneinheit erfolgen. Die Ausführung in einem Ausführungsmodus erfolgt beispielsweise in einer zweiten Recheneinheit, wobei die beim Anlernen ermittelte Gültigkeitsinformation bei der Ausführung in der Ausführungs-Recheneinheit verwendet wird. Die durch die Anlern-Recheneinheit beispielsweise ermittelte Gültigkeitsinformation wird vorzugsweise manipulationsgeschützt bereitgestellt.

### Programmbefehle:

Im Zusammenhang mit der Patentanmeldung können unter Programmbefehlen die Programmbefehle verstanden werden, die eine Anwendung als Ganzes vorzugsweise inklusive der verwendeten Bibliotheken umfasst.

### Programmkomponente:

Unter einer Programmkomponente kann im Zusammenhang mit der Patentanmeldung eine Softwarekomponente mit Programmbefehlen verstanden werden, die das erfindungsgemäße Verfahren implementieren.

### Signaturfunktion:

Eine Signaturberechnungsfunktion oder Signaturfunktion zur Berechnung einer digitalen Signatur lässt sich beispielsweise mit dem DAS (engl. Digital Signature Algorithm) oder dem ECDSA (engl. Elliptic Curve Digital Signature Algorithm) realisieren. Die Berechnung der digitalen Signatur kann beispielsweise unter Verwendung eines Prozessors und/oder Speichers erfolgen.

### Übereinstimmung:

Zwei Verträge sollen beispielsweise dann als "im Wesentlichen übereinstimmend" angesehen werden, wenn Vertrag A inhaltlich mit Vertrag B übereinstimmt. Unter einer unzureichenden Übereinstimmung kann im Zusammenhang mit der Patentanmeldung verstanden werden, dass beispielsweise Datenbits von verschlüsselten Daten eines Datenpakets einer Netzkommunikation bei einer statistischen Analyse statistischen Eigenschaften, insbesondere erwarteten oder vorgegebenen statistischen Eigenschaften, nicht genügt. Diese statistischen Eigenschaften können beispielsweise durch einen Verschlüsselungsalgorithmus vorgegeben werden, der durch eine Sicherheitsrichtlinie für die Netzkommunikation gefordert wird. Dies kann bedeuten, dass die Datenbits der Nutzdaten des Datenpaketes beispielsweise eine zufällige statistische Verteilung aufweisen sollen, um zu bestätigen, dass diese verschlüsselt sind. Weisen die Datenbits hingegen eine nicht-zufällige statistische Verteilung auf, weisen diese insbesondere eine unzureichende Übereinstimmung mit vorgegebenen statistischen Eigenschaften auf. Unter einer unzureichenden Übereinstimmung kann aber auch verstanden werden, dass eine oder mehrere Anforderungen einer Sicherheitsrichtlinie an eine Netzkommunikation nicht erfüllt sind.

### Ausführungspfade:

Im Zusammenhang mit der Patentanmeldung können unter Ausführungspfaden Teilbereiche der Anwendung verstanden werden, die mehrere direkt aufeinander folgende auszuführende Programmbefehle umfassen und die insbesondere einer bestimmten Teilfunktionalität der Anwendung zugeordnet sind. Ausführungspfade können auch Teilbereiche sein, die abhängig von einer Bedingung, beispielsweise einer If-Else-Bedingung, ausgeführt werden.

### Zufallsbits

Unter Zufallsbits, einer Zufallsbitfolge oder einer Pseudo Random Permutation können im Zusammenhang mit der Patentanmeldung zufällig oder pseudozufällig verteile Bitfolgen verstanden werden.

### On-the-fly:

Unter dem Begriff on-the-fly kann im Zusammenhang mit der Patentanmeldung verstanden werden, dass beispielsweise Datenpakete direkt während einer Verarbeitung in einer Netzkomponente analysiert werden. Eine Netzkomponente kann beispielsweise ein Switch sein, der ein Datenpaket an den Port leitet, mit dem ein Empfänger des Datenpaketes verbunden ist. Eine Latenzzeit bei einer Übermittlung des Datenpakets wird dabei vorzugsweise nicht erhöht.

### Echtzeit:

Unter Echtzeit kann im Zusammenhang mit der Patentanmeldung verstanden werden, dass das Analysieren und/oder das Bereitstellen zuverlässig innerhalb einer vorbestimmten Zeitspanne, beispielsweise in einem festen Zeitraster, durchgeführt wird. Dies kann für eine Netzkommunikation bedeuten, dass das Analysieren und/oder das Bereitstellen innerhalb einer Zeitspanne erfolgt, bevor das Datenpaket an sein Ziel übertragen wurde, oder ohne eine nennenswerte Erhöhung der Übertragungsdauer des Datenpaketes erfolgt.

### Gültigkeitsinformationslos:

Im Zusammenhang mit der Patentanmeldung kann unter dem Begriff gültigkeitsinformationslos verstanden werden, dass einem Programmbefehl und/oder einer Subroutine/Funktion und/oder einer Programmbibliothek keine Gültigkeitsinformation zugeordnet ist. Falls beispielsweise jedem Programmbefehl ein bestimmter Speicherbereich zugeordnet ist, in dem die Gültigkeitsinformation abgelegt werden kann, so kann für einen gültigkeitsinformationslosen Programmbefehl dieser Speicherbereich beispielsweise mit Nullen oder einem anderen Wert belegt werden, der angibt, dass für diesen Programmbefehl keine Gültigkeitsinformation verfügbar ist. Unter dem Begriff gültigkeitsinformationslos kann zusätzlich verstanden werden, dass einem Programmbefehl eine Ungültigkeitsinformation zugeordnet ist.

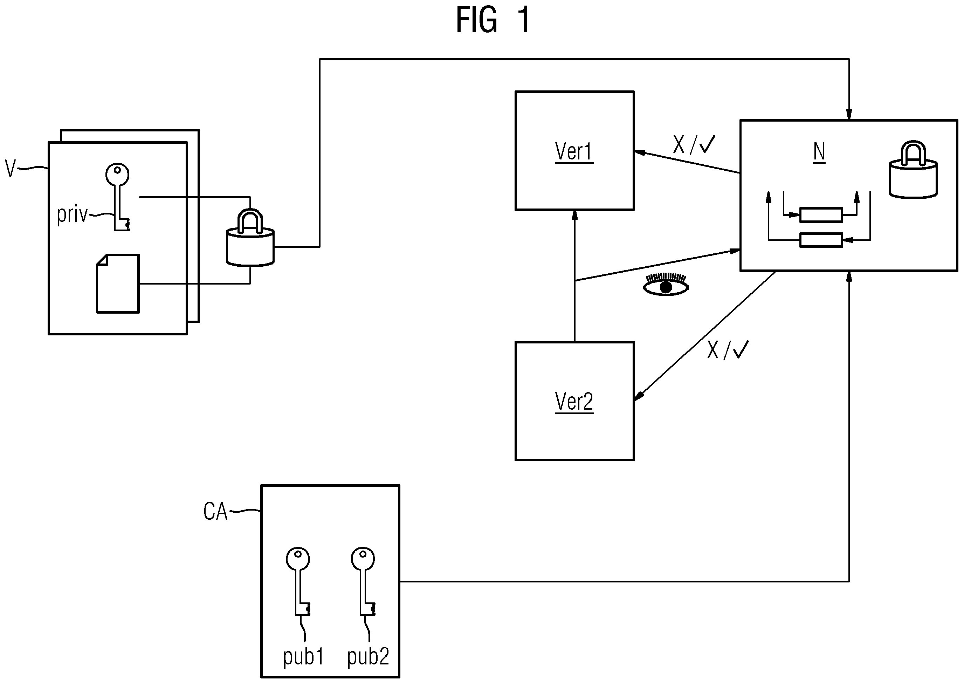

Beispiele und Ausführungsformen der vorliegenden Erfindung werden noch in exemplarischer Weise mit Bezug auf die Figuren 1 bis 5 der angehängten Zeichnung beschrieben:
Figur 1: Beitritt eines neuen Teilnehmers zu einem Netz Wird beispielsweise ein Dienst (App) einem bestehenden Netz, z.B. einem IoT-Netz (Internet of Things), neu hinzugefügt, so muss der Hersteller (Vendor, V) dieses Dienstes, alle Verträge (Contracts, C) mit seinem privaten Schlüssel (Private Key, priv) signieren und anschließend an alle Verifikationssubsysteme (Ver) der Teilnehmer des Netzes, der sogenannten Trusted Infrastructure, verschicken (send) oder diesen die Verträge zugänglich machen. Erforderliche öffentliche Schlüssel (Public Keys pub1 + pub2) werden von einer zertifizierten Stelle (Certified Authority, CA) angefordert (req).
   Ein Teilnehmer ist beispielsweise ein Computersystem, das Datenaustausch über ein Netz mit anderen Teilnehmern hat. Ein Dienst ist ein computergestütztes Verfahren. Dieser Dienst kann auf mehreren Teilnehmern laufen. Auch können mehrere Dienste auf einem Teilnehmer ausgeführt werden. Im Zusammenhang mit der Patentanmeldung können Computersysteme und Dienste als Netzteilnehmer verstanden werden.

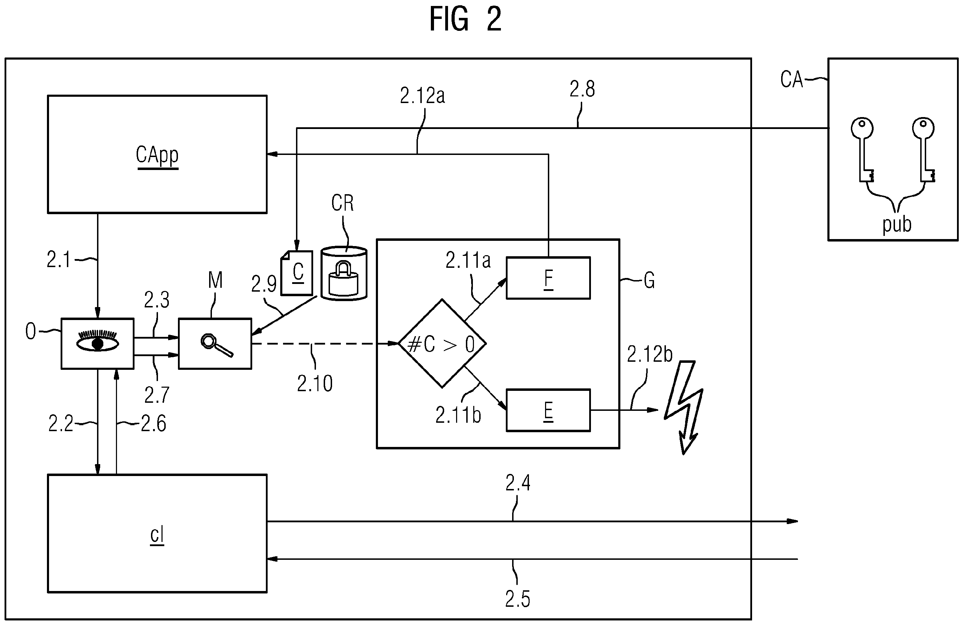

Figur 2: Verbraucherseitige Verifikation
   Unter den Netzteilnehmer gibt es beispielsweise Verbraucher (Consumer, con) und Anbieter (Provider, pro). Ein Verbraucher (con) will sich schützen, indem er einen schädlichen Anbieterdienst (PApp) im Netz identifiziert. Ein Dienst eines Verbrauchers (CApp) sendet in einem ersten Schritt (2.1) eine Anfrage (request, req) an den Observer (O). Der Observer (O) leitet als zweiter Schritt (2.2) die Anfrage (req) an das Interface (cl) weiter. Parallel dazu wird die Anfrage (req) an den Matcher (m) gesendet (2.3). Dieser stellt eine Kernkomponente des Systems dar. Der Matcher (m) speichert die Anfrage (req) auch für weitere Abgleiche (checks, vgl. Schritte 2.7, 2.8 und 2.9). Die Anfrage (req) wird außerdem von dem Interface, also der Netz-Kommunikationsschicht (cl) an den Anbieter (pro) gesendet (send, 2.4) und die Antwort (response, res) des Anbieters (pro) geht an das Interface (cl) (2.5) zurück. Diese Antwort (res) wiederum wird dann vom Interface (cl) an den Observer (O) weitergeleitet (2.6). Der Observer (O) wiederum leitet die Antwort (res) an den Matcher (m) weiter (2.7). Alle erforderlichen öffentlichen Schlüssel (pub) fordert (req, Schritt 8) der Matcher (m) von der zertifizierten Stelle (CA) an. Die öffentlichen Schlüssel (pub) werden benötigt um Zugriff (2.9) auf die verschlüsselt abgespeicherten Verträge (C) im Vertragsverzeichnis (Contract Repository, CR) zu bekommen. Der Matcher (M) wählt die Verträge (C) aus, die zur Anfrage (req) und Antwort (res) passen. In Schritt 2.10 werden die Antwort (res) und die ausgewählten Verträge (C), falls welche gefunden wurden, an das Response Gate weitergeleitet (2.10). Wenn zumindest ein passender Vertrag (C) gefunden wird, wird die Antwort (res) an den Forwarder (F) gesendet, der diese an den Verbraucherdienst (CApp) weiterleitet (2.12a). Im Fall, dass kein passender Vertrag (C) gefunden wird, ist das ein Zeichen für einen schädlichen Anbieterdienst (PApp). Die Antwort (res) wird dann an den Escalater (E) gesendet (2.11b), welcher beispielsweise eine Warnmeldung (2.12b) erzeugt oder still den schädlichen Dienst aus zukünftiger Kommunikation ausschließt.
   Die Gesamtheit der Softwarekomponenten Observer (O), Matcher (M), Gate (G), welches insbesondere ein Request Gate und/oder Response Gate umfassen kann, Vertragsverzeichnis (CR) und Encoder (E) sind zu einem Verifikationssubsystem verbunden. Die zugehörigen Verfahrensschritt werden entsprechend in der Verifikationsstufe oder dem Verifikationsdienst zusammengefasst.

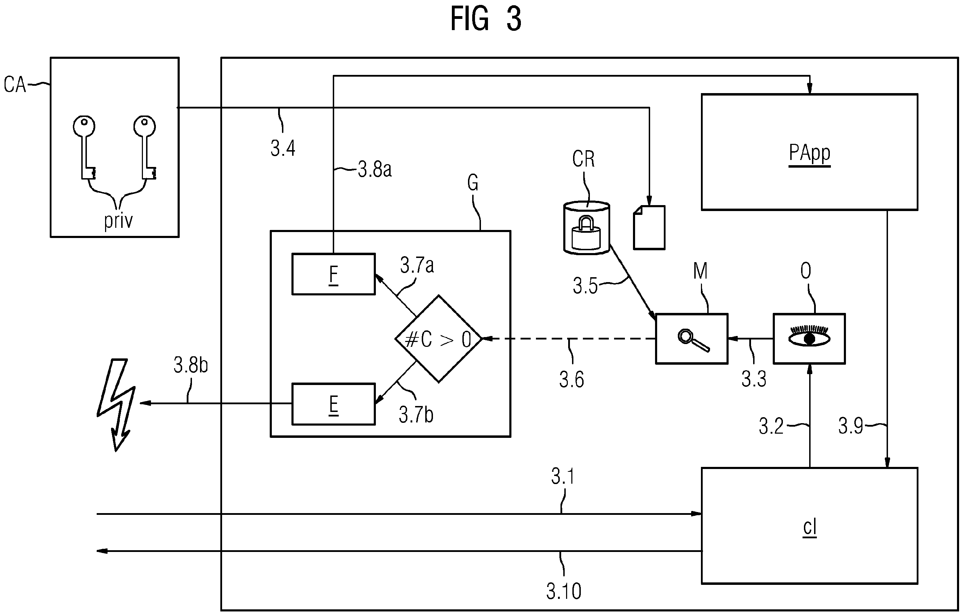

Figur 3: Anbieterseitige Verifikation
   Analog kann ein schädlicher Verbraucherdienst (CApp) identifiziert werden. Eine Anfrage (req, 1) eines Verbraucherdienstes (CApp) wird zunächst vom Interface (cl) empfangen. Diese Anfrage (req) wird dann an den Observer (O) weitergeleitet (3.2). Der Observer (O) gibt die Anfrage (req) an den Matcher (M) weiter (3.3). Der Matcher (M) fordert alle erforderlichen öffentlichen Schlüssel (pub) von der zertifizierten Stelle (CA) an (3.4). Dann wählt der Matcher (M) aus dem Vertragsverzeichnis (CR) die Verträge (C) aus, die zur Anfrage (req) passen, wofür die öffentlichen Schlüssel (pub) notwendig sind, um die im Vertragsverzeichnis (CR) abliegenden Verträge (C) zu entschlüsseln (3.5). Die Anfrage (req) sowie die ausgewählten Verträge (C), falls passende gefunden wurden, werden an das Request Gate/ Anfrage-Gate / Anfrage-Gatter geschickt (3.6). Im Fall, dass kein passender Vertrag (C) gefunden wird, ist das ein Zeichen für einen schädlichen Verbraucherdienst (CApp). Die Anfrage (req) wird dann an den Escalater (E) gesendet (3.7b), welcher eine Warnmeldung (3.8b) erzeugt oder still den schädlichen Dienst aus zukünftiger Kommunikation ausschließt. Wenn zumindest ein passender Vertrag (C) gefunden wird, wird die Anfrage (req) an den Forwarder (F) gesendet (3.7a), der diese an den Anbieterdienst (PApp) weiterleitet (3.8a). Wenn der Anbieterdienst (PApp) diese Anfrage (req) vom Forwarder (F) erhält, sendet (3.9) er seine Anwort (res) an das Interface (cl), welche die Antwort (res) an den Verbraucherdienst (CApp) weiterleitet (3.10).

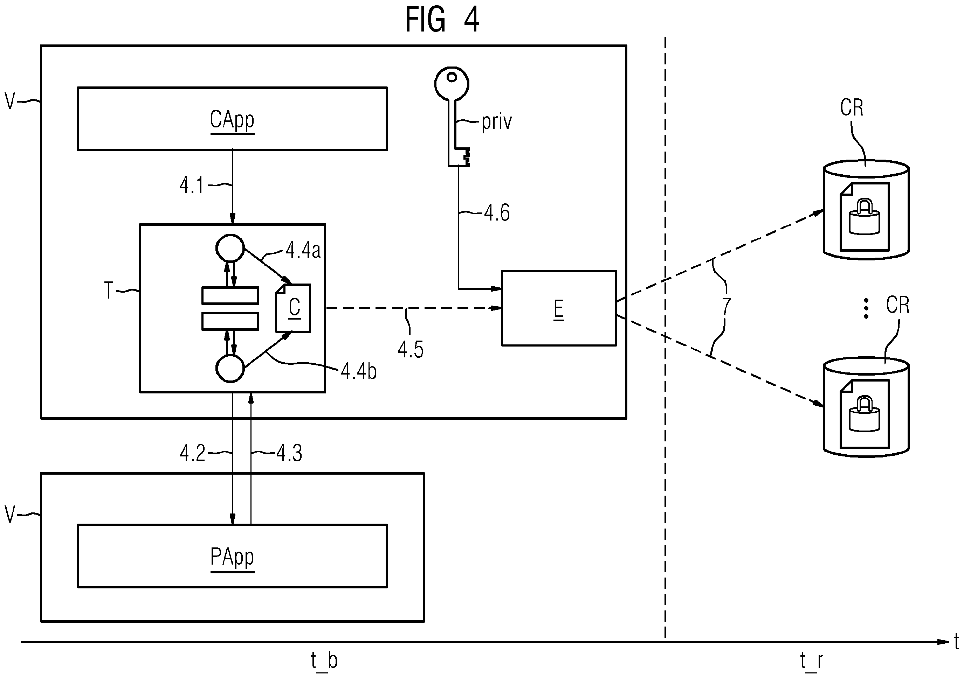

Figur 4: Sichere Verteilung und Speicherung von Verträgen Die Verträge (C) zwischen Anbieter (pro) und Verbraucher (con) können separat vereinbart werden, sie können aber auch sehr effizient während der Entwicklungszeit (t_b) der Dienstsoftware automatisch generiert werden, z.B. über die Vertragstests. Die fertigen Verträge (C) werden nach abgeschlossener Entwicklung des Netzes verschlüsselt und in einem Vertragsverzeichnis (CR) abgelegt.
   Hieraus ergibt sich ein Vorteil sehr geringen Verwaltungsaufwands, da das Einbringen neuer Kontrakte durch einen einheitlichen Mechanismus erfolgt, wie im Folgenden beschrieben. Die Services (Dienste) müssen nicht individuell verwaltet werden. Auf der linken Seit der Figur 4 sind verschiedene Vorgänge und Maßnahmen während der Entwicklungszeit (t_b) dargestellt, auf der rechten Seite der Graphik ist die Ablage der Verträge (C) in die Vertragsverzeichnisse (CR) gezeigt.
   Während der Entwicklungszeit (t_b) veranlasst ein Hersteller (V) eines Verbraucherdienstes (CApp) Vertragstests (T): Auf jede mögliche Anfrage (req, 4.1) soll der Anbieterdienst (PApp) reagieren können. Der Hersteller (V) definiert dazu einen Vertrag (C) und erstellt verbraucherseitig eine Vertragsverifikation. Ein Hersteller (V) kann beispielsweise auch ein Dritthersteller oder ein Fremdanbieter einer Netzstruktur sein.
   Anschließend erfolgt ein Vertragstest (T), bei dem jede Anfrage (req) zum zuständigen Anbieterdienst (PApp) gesendet wird (4.2) und auf Anbieterseite der Vertrag (C) getestet wird. Das Ergebnis jeder Vertragsverifikation durch den Anbieter (pro) wird zurück an den Hersteller (V) des Verbraucherdienstes (CApp) geschickt (4.3). Dann wird geprüft, ob der Vertragstest (T) auf Seite des Verbrauchers (con) erfolgreich war und ob alle anbieterseitigen Vertragstest erfolgreich waren und entsprechende Ergebnisse in den Vertrag (C) eingefügt (4.4a und 4.4b).
   Waren alle Tests (T) erfolgreich, werden die Verträge (C), wie ursprünglich vom Verbraucher erstellt, an einen Kodierer (Encoder) weitergeleitet (4.5). Der Kodierer () verschlüsselt und signiert die Verträge (C) mit dem privaten Schlüssel (priv) des Herstellers (V) des Verbraucherdienstes (CApp). Der jeweils zugehörige öffentliche Schlüssel (pub, 4.6) wird in zertifizierter Stelle (CA) abgelegt. Anschließend werden die so erstellten Verträge (C) in allen Vertragsverzeichnissen (CR) des Netzs gespeichert (4.7).

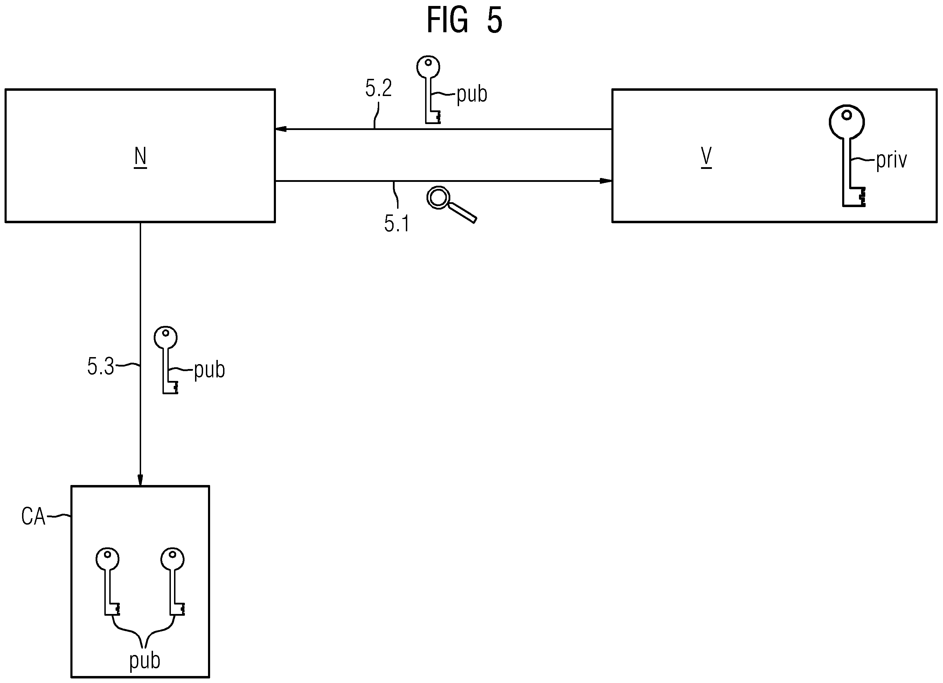

Figur 5: Sichere Aufnahme neuer Hersteller
   Die Vertrauenswürdigkeit eines neuen Herstellers (V) wird vom Netzbetreiber (N) geprüft (5.1). Der Hersteller (V) erzeugt dazu ein Schlüsselpaar aus einem privaten (priv) und einem öffentlichen Schlüssel (pub). Der private Schlüssel (priv) wird vom Hersteller (V) intern gespeichert. Der öffentliche Schlüssel (pub) wird an den Netzbetreiber (N) gesendet (5.2). Sobald der Hersteller (V) in Schritt 5.1 erfolgreich verifiziert wird, leitet der Netzbetreiber (N) den öffentlichen Schlüssel (pub) an die zertifizierte Stelle (CA) weiter.

### Bezugszeichenliste

- con: Verbraucher (Consumer)
- pro: Anbieter (Provider)
- PApp: Anbieterdienst
- CApp: Dienst eines Verbrauchers
- req: Anfrage (request)
- O: Observer / Beobachtung
- cl: Interface, IoT-/Netzwerks-Kommunikationsschicht
- M: Matcher / Abgleich, Abgleichsfunktion
- ch: Abgleiche (checks)
- res: Antwort (response)
- key: Schlüssel
- pub: öffentlichen Schlüssel
- priv: privater Schlüssel
- CA: zertifizierten Stelle
- C: Verträge
- CR: Vertragsverzeichnis (Contract Repository)
- G: Response-/Request-Gate/ Logikgatter
- F: Forwarder
- E: Escalater
- t_b: Entwicklungszeit (Built time)
- t_r: Betriebszeit (run time)
- N: Netz, z.B. IoT
- Ver: Verifikationssubsystem

## Patentansprüche

1. Computergestütztes Verfahren umfassend eine Identifikation/Erkennung von nicht-qualifizierten Diensten in einem Netz verteilter Dienste umfassend eine Vereinbarung von Vergleichs-Interaktionsmustern zwischen wenigstens zwei Diensten (CApp, PApp) in einem Vertrag (C), eine Beobachtung (O) von Interaktionsmustern während der Kommunikation der Dienste (CApp, PApp) und einen Abgleich (M) der beobachteten Interaktionsmuster mit den Vergleichs-Interaktionsmustern, bei dem die für einen Abgleich (M) erforderliche Schlüssel (key) in einer absicherbaren Entwicklungszeit-Umgebung vorgehalten werden und nicht in der offenen Betriebszeit-Umgebung verfügbar sind.

2. Computergestütztes Verfahren nach Anspruch 1, wobei die Vergleichs-Interaktionsmuster während der Entwicklungszeit (t_b) den erforderlichen Tests (T) entnommen werden.

3. Computergestütztes Verfahren nach Anspruch 1 oder 2, umfassend eine Meldung (2.12b, 3.8b) eines als nicht-qualifiziert erkannten Dienstes (CApp, PApp) beim Administrator und/oder einen Ausschluss eines als nicht-qualifiziert erkannten Dienstes aus dem Netz verteilter Dienste.

4. Computergestütztes Verfahren nach einem der vorstehenden Ansprüche, in dem ein Dienst (CApp, PApp) eine Kommunikation (req, res), die er mit einem anderen Dienst (PApp, CApp) unterhält, beobachtet (O).

5. Computergestütztes Verfahren nach Anspruch 4, umfassend einen Abgleich (M) der beobachteten Kommunikation (req, res) ausgehend von einem anderen Dienst mit dem Vertrag / der Vertragsspezifikation (C).

6. Computergestütztes Verfahren nach einem der vorstehenden Ansprüche, bei dem für eine Hinzufügung eines weiteren Dienstes (CApp, PApp) zu einem bestehenden Netz verteilter Dienste, die diesen weiteren Dienst betreffenden Verträge (C) signiert und/oder kryptografisch gesichert allen Verifikationssubsysteme des Netzes zugänglich gemacht werden.

7. Computergestütztes Verfahren nach Anspruch 6, wobei die Signatur und/oder kryptografische Sicherung mit einem privaten Schlüssel (priv) erfolgt.

8. Computersystem aufweisend eine Ausführungsumgebung für wenigstens einen Dienst eines Verbrauchers und/oder Anbieters (CApp. PApp), so in einem Netz verteilter Dienste als zertifizierter Teilnehmer eingebunden, dass es mit wenigstens einem weiteren Computersystem kommunizieren kann und Zugriff auf wenigstens eine Speichereinheit mit einem Vertragsverzeichnis (CR) hat, in dem Verträge (C) mit Vergleichs-Interaktionsmustern bereitgestellt sind, wobei das Computersystem wenigstens eine Datenverbindung mit einem Observer (O) aufweist, welcher ausgestaltet ist Beobachtungsdaten von Interaktionsmustern während der Kommunikation (req, res) mit dem weiteren Computersystem aufzunehmen, wobei das Computersystem wenigstens eine direkte Datenverbindung mit einem Interface (cl) und/oder eine indirekte Datenverbindung mit einer Interface (cl) über den Observer (O) aufweist sowie eine direkte Datenverbindung mit einem Gate (G) über einen Forwarder (F) des Gates (G) und eine indirekte Datenverbindung mit dem Gate (G) über den Observer (O) und einen Matcher (M) oder über den Observer, einen Matcher (M) und das Interface (cl), wobei der Matcher (M) ausgestaltet ist für einen Abgleich erforderliche Schlüssel (key) von einer zertifizierten Stelle (CA) anzufordern, damit auf signierte und/oder kryptografisch gesicherte Verträge (C) im Vertragsverzeichnis (CR) zuzugreifen und Verträge (C) daraus auszuwählen, die zu den Interaktionsmustern der beobachteten Kommunikation (req, res) passen, wobei die bei dem die für einen Abgleich (M) erforderliche Schlüssel (key) in einer absicherbaren Entwicklungszeit-Umgebung vorgehalten werden und nicht in der offenen Betriebszeit-Umgebung verfügbar sind.

9. Computersystem nach Anspruch 8, wobei die Komponenten Observer (O), Matcher (M), Gate (G), Vertragsverzeichnis (CR), Encoder (E) in einem Verifikationssubsystem zwischen einem Dienst und einem Interface (cl) realisiert sind, wobei das Verifikationssubsystem insbesondere dieselbe Applikationsschnittstelle wie das Interface (cl) aufweist.

10. Verteiltes Netz umfassend wenigstens einen ersten zertifizierten Teilnehmer oder einen ersten zertifizierten Dienst eines Teilnehmers, Verbrauchers und/oder Anbieters (CApp. PApp), umfassend wenigstens einen zweiten zertifizierten Teilnehmer und/oder einen zweiten zertifizierten Dienst (CApp. PApp), welcher mit dem ersten Dienst kommuniziert, umfassend wenigstens eine Speichereinheit mit einem Vertragsverzeichnis (CR), in dem Vertragsspezifikationen (C) mit Vergleichs-Interaktionsmustern bereitgestellt sind, wobei das Netz wenigstens eine Datenverbindung des ersten Dienstes (CApp. PApp) mit einem Observer (O) aufweist, welcher ausgestaltet ist Beobachtungsdaten von Interaktionsmustern während der Kommunikation (req, res) mit dem zweiten Dienst aufzunehmen, wobei das Netz wenigstens eine direkte Datenverbindung des ersten Dienstes mit einer Interface (cl) und/oder eine indirekte (Daten)verbindung des ersten Dienstes mit einem Interface (cl) über den Observer (O) aufweist sowie eine direkte Datenverbindung des ersten Dienstes mit einem Gate (G) über einen Forwarder (F) des Gates (G) und eine indirekte Datenverbindung des ersten Dienstes mit dem Gate (G) über den Observer (O) und einen Matcher (M) oder über den Observer (O), einen Matcher (M) und das Interface (cl), wobei der Matcher (M) ausgestaltet ist, für einen Abgleich erforderliche Schlüssel (key) von einer zertifizierten Stelle (CA) anzufordern, damit auf signierte und/oder kryptografisch gesicherte Verträge (C) im Vertragsverzeichnis (CR) zuzugreifen und Verträge (C) daraus auszuwählen, die zur den Interaktionsmustern der beobachteten Kommunikation (req, res) passen, wobei die für einen Abgleich erforderlichen Schlüssel (key) in einer absicherbaren Entwicklungszeit-Umgebung vorgehalten werden und nicht in der offenen Betriebszeit-Umgebung verfügbar sind.

11. Verteiltes Netz nach Anspruch 10, welches offen für den Beitritt neuer Teilnehmer und/oder Dienste (CApp, PApp) ist.

12. Verteiltes Netz nach einem der vorstehenden Ansprüche 10 oder 11, welches dezentral aufgebaut ist.

13. Computerprogrammprodukt, welches direkt in einen Speicher einer programmierbaren Recheneinheit eines Computersystems ladbar ist, mit Programmcode-Mitteln, um ein Verfahren nach einem der Ansprüche 1 - 7 auszuführen, wenn das Computerprogrammprodukt in der Recheneinheit eines Computersystems ausgeführt wird.

14. Bereitstellungsvorrichtung für das Computerprogrammprodukt nach Anspruch 13, wobei die Bereitstellungsvorrichtung das Computerprogrammprodukt speichert und/oder bereitstellt.

## Claims

1. Computer-aided method comprising identifying/detecting non-qualified services in a network of distributed services, comprising agreeing comparative interaction patterns between at least two services (CApp, PApp) in a contract (C), observing (0) interaction patterns during the communication of the services (CApp, PApp) and comparing (M) the observed interaction patterns with the comparative interaction patterns, wherein the keys (key) required for a comparison (M) are maintained in a securable build time environment and are not available in the open runtime environment.

2. Computer-aided method according to Claim 1, wherein the comparative interaction patterns are taken from the required tests (T) during the build time (t_b).

3. Computer-aided method according to Claim 1 or 2, comprising reporting (2.12b. 3.8b) a service (CApp, PApp) detected as non-qualified to the administrator and/or excluding a service detected as non-qualified from the network of distributed services.

4. Computer-aided method according to one of the preceding claims, wherein a service (CApp, PApp) observes (0) a communication (req, res) that it conducts with another service (PApp, CApp).

5. Computer-aided method according to Claim 4, comprising comparing (M) the observed communication (req, res) from another service with the contract/the contract specification (C) .

6. Computer-aided method according to one of the preceding claims, wherein, in order to add a further service (CApp, PApp) to an existing network of distributed services, the contracts (C) relating to this further service are signed and/or cryptographically secured and made accessible to all verification subsystems of the network.

7. Computer-aided method according to Claim 6, wherein the signature and/or cryptographic security are implemented using a private key (priv).

8. Computer system having an execution environment for at least one service of a consumer and/or supplier (CApp, PApp), integrated in a network of distributed services as a certified subscriber such that it is able to communicate with at least one further computer system and has access to at least one memory unit containing a contract repository (CR) in which contracts (C) containing comparative interaction patterns are provided, wherein the computer system has at least one data connection to an observer (0) that is designed to record observation data on interaction patterns during the communication (req, res) with the further computer system, wherein the computer system has at least a direct data connection to an interface (cl) and/or an indirect data connection to an interface (cl) via the observer (O) and also a direct data connection to a gate (G) via a forwarder (F) of the gate (G) and an indirect data connection to the gate (G) via the observer (O) and a matcher (M) or via the observer, a matcher (M) and the interface (cl), wherein the matcher (M) is designed to request keys (key) required for a comparison from a certified authority (CA), to use them to access signed and/or cryptographically secured contracts (C) in the contract repository (CR) and to select contracts (C) therefrom that match the interaction patterns of the observed communication (req, res), wherein the keys (key) required for a comparison (M) are maintained in a securable build time environment and are not available in the open runtime environment.

9. Computer system according to Claim 8, wherein the components observer (O), matcher (M), gate (G), contract repository (CR) and encoder (E) are implemented in a verification subsystem between a service and an interface (cl), wherein the verification subsystem in particular has the same application interface as the interface (cl).

10. Distributed network comprising at least a first certified subscriber or a first certified service of a subscriber, consumer and/or supplier (CApp, PApp), comprising at least a second certified subscriber and/or a second certified service (CApp, PApp) that communicates with the first service, comprising at least one memory unit containing a contract repository (CR) in which contract specifications (C) containing comparative interaction patterns are provided, wherein the network has at least one data connection of the first service (CApp, PApp) to an observer (O), which is designed to record observation data on interaction patterns during the communication (req, res) with the second service, wherein the network has at least a direct data connection of the first service to an interface (cl) and/or an indirect (data) connection of the first service to an interface (cl) via the observer (O) and also a direct data connection of the first service to a gate (G) via a forwarder (F) of the gate (G) and an indirect data connection of the first service to the gate (G) via the observer (O) and a matcher (M) or via the observer (O), a matcher (M) and the interface (cl), wherein the matcher (M) is designed to request keys (key) required for a comparison from a certified authority (CA), to use them to access signed and/or cryptographically secured contracts (C) in the contract repository (CR) and to select contracts (C) therefrom that match the interaction patterns of the observed communication (req, res), wherein the keys (key) required for a comparison are maintained in a securable build time environment and are not available in the open runtime environment.

11. Distributed network according to Claim 10, which is open to the joining of new subscribers and/or services (CApp, PApp).

12. Distributed network according to either of preceding Claims 10 and 11, which has a decentralized structure.

13. Computer program product, which is able be loaded directly into a memory of a programmable processing unit of a computer system, containing program code means for carrying out a method according to one of Claims 1 - 7 when the computer program product is executed in the processing unit of a computer system.

14. Providing device for the computer program product according to Claim 13, wherein the providing device stores and/or provides the computer program product.

## Revendications

1. Procédé assisté par ordinateur comprenant une identification/reconnaissance de services non qualifiés dans un réseau de services répartis comprenant un accord de modèles d'interaction de comparaison entre au moins deux services (CApp, PApp) dans un contrat (C), une observation (O) de modèles d'interaction pendant la communication des services (CApp, PApp) et une égalisation (M) des modèles d'interaction observés avec les modèles d'interaction de comparaison, dans lequel les clés (key) nécessaires pour une égalisation (M) sont tenues à disposition dans un environnement de temps de développement protégeable et ne sont pas disponibles dans l'environnement de temps de fonctionnement ouvert.

2. Procédé assisté par ordinateur suivant la revendication 1, dans lequel on prélève les modèles d'interaction de comparaison aux tests (T) nécessaires pendant le temps (t_b) de développement.

3. Procédé assisté par ordinateur suivant la revendication 1 ou 2, comprenant un message (2.12b, 3.8b) d'un service (CApp, PApp) reconnu comme non qualifié auprès de l'administrateur et/ou une conclusion d'un service reconnu comme non qualifié parmi les services répartis du réseau.

4. Procédé assisté par ordinateur suivant l'une des revendications précédentes, dans lequel un service (CApp, PApp) observe (O) une communication (req, res), qu'il entretient avec un autre service (PApp, CApp).

5. Procédé assisté par ordinateur suivant la revendication 4, comprenant une égalisation (M) de la communication (req, res) observée à partir d'un autre service avec le contrat / la spécification (C) du contrat.

6. Procédé assisté par ordinateur suivant l'une des revendications précédentes, dans lequel pour une addition d'un autre service (CApp, PApp) à un réseau existant de services répartis, on signe les contrats (C) concernant cet autre service et/ou on rend accessible d'une manière sécurisée par cryptographie tous les sous-systèmes de vérification du réseau.

7. Procédé assisté par ordinateur suivant la revendication 6, dans lequel la signature et/ou la sécurisation en cryptographie s'effectue par une clé (priv) privée.

8. Système d'ordinateur comportant un environnement de réalisation pour au moins un service d'un consommateur et/ou d'un offreur (CApp. PApp), entré dans un réseau de services répartis comme participant certifié, de manière à ce qu'il puisse communiquer avec au moins un autre système d'ordinateur et ait accès à au moins une unité de mémoire ayant une liste (CR) de contrats, dans laquelle des contrats (C) ayant des modèles d'interaction de comparaison sont mis à disposition, dans lequel le système d'ordinateur a au moins une liaison de données avec un observateur (O) qui est conformé pour recevoir des données d'observation de modèles d'interaction pendant la communication (req, res) avec l'autre système d'ordinateur, dans lequel le système d'ordinateur a au moins une liaison de données directe avec une interface (c1) et/ou une liaison de données indirecte avec une interface (c1) par l'observateur (O) ainsi qu'une liaison de données directe avec une porte (G) par un forwarder (F) de la porte (G) et une liaison de données indirecte avec la porte (G) par l'observeur (O) et un matcheur (M) ou par l'observateur, un matcheur (M) et l'interface (c1), dans lequel le matcheur (M) est conformé pour demander d'un endroit (CA) certifié une clé (key) nécessaire à une égalisation, afin d'accéder dans la liste (CR) de contrats à des contrats (C) signés et/ou sécurisés cryptographiquement et en sélectionner des contrats (C) qui s'adaptent aux modèles d'interaction de la communication (req, res) observée, dans lequel les clés (key) nécessaires pour une égalisation (M) sont tenues à disposition dans un environnement de temps de développement protégeable et ne sont pas disponibles dans l'environnement de temps de fonctionnement ouvert.

9. Système d'ordinateur suivant la revendication 8, dans lequel les composants observateur (O), matcheur (M), porte (G), liste (CR) de contrats, codeur (E) sont réalisés dans un sous-système de vérification entre un service et une interface (c1), dans lequel le sous-système de vérification a en particulier la même interface d'application que l'interface (c1).

10. Réseau réparti comprenant au moins un premier participant certifié ou un premier service certifié d'un participant, d'un utilisateur et/ou d'un offreur (CApp. PApp), comprenant au moins un deuxième participant certifié et/ou un deuxième service (CApp. PApp) certifié, qui communique avec le premier service, comprenant au moins une unité de mémoire ayant une liste (CR) de contrats, dans laquelle des spécifications (C) de contrat ayant des modèles d'interaction de comparaison sont mis à disposition, dans lequel le réseau a au moins une liaison de données du premier service (CApp. PApp) avec un observateur (O), qui est conformée pour recevoir des données d'observation de modèles d'interaction pendant la communication (req, res) avec le deuxième service, dans lequel le réseau a au moins une liaison de données directe avec une interface (c1) et/ou une liaison de données indirecte avec une interface (c1) par l'observateur (O) ainsi qu'une liaison de données directe avec une porte (G) par un forwarder (F) de la porte (G) et une liaison de données indirecte avec la porte (G) par l'observeur (O) et un matcheur (M) ou par l'observateur (O), un matcheur (M) et l'interface (c1), dans lequel le matcheur (M) est conformé pour demander d'un endroit (CA) certifié une clé (key) nécessaire à une égalisation, afin d'accéder dans la liste (CR) de contrats à des contrats (C) signés et/ou sécurisés cryptographiquement et en sélectionner des contrats (C) qui s'adaptent aux modèles d'interaction de la communication (req, res) observée, dans lequel les clés (key) nécessaires pour une égalisation (M) sont tenues à disposition dans un environnement de temps de développement protégeable et ne sont pas disponibles dans l'environnement de temps de fonctionnement ouvert.

11. Réseau réparti suivant la revendication 10, qui est ouvert pour l'accès à de nouveaux participants et/ou services (CApp, PApp).

12. Réseau réparti suivant l'une des revendications 10 ou 11 précédentes, qui est constitué de manière décentralisé.

13. Produit de programme d'ordinateur qui peut être chargé directement dans une mémoire d'une unité informatique programmable d'un système d'ordinateur, comprenant des moyens de codes de programme pour exécuter un procédé suivant l'une des revendications 1 à 7, lorsque le produit de programme d'ordinateur est réalisé dans l'unité informatique d'un système d'ordinateur.

14. Dispositif de mise à disposition du produit de programme d'ordinateur suivant la revendication 13, dans lequel le dispositif de mise à disposition met en mémoire et/ou met à disposition le produit de programme d'ordinateur.
